# EUROPÄISCHE PATENTSCHRIFT

(11) **EP 1 466 819 B1**
(45) Veröffentlichungstag und Bekanntmachung des Hinweises auf die Patenterteilung: **07.12.2005**
(21) Anmeldenummer: 04005742.4
(22) Anmeldetag: 11.03.2004
(51) Int. Cl.: B62H 3/08, B61B 12/00

(54) **Fahrradtransportvorrichtung**
Bicycle carrying device
Dispositif pour le transport de bicyclette

(30) Priorität: 12.04.2003 DE 10316976
(43) Veröffentlichungstag der Anmeldung: 13.10.2004
(73) Patentinhaber: Feuerberglifte GmbH, 97815 Lohr am Main (DE)
(72) Erfinder: Lindner, Gerhard, 97816 Lohr am Main (DE); Ott, Rudolph, 97816 Lohr am Main (DE)
(74) Vertreter: Pöhner, Wilfried Anton, Dr.

(56) Entgegenhaltungen:
- WO-A-03/059473
- DE-C- 813 042
- GB-A- 296 892
- GB-A- 659 489
- US-A- 2 244 650
- US-A- 5 699 985
- US-A- 6 019 266
- US-B1- 6 394 283

## Beschreibung

Die Erfindung betrifft eine Personenseilschwebebahn mit einem Sessel oder einer Kabine.

Personenseilschwebebahnen sind im Hochgebirge und an den Berghängen vieler Mittelgebirge zu finden. Seit sich das Mountainbiking als beliebte Freizeitsportart etabliert hat, besteht ein anhaltender Bedarf zum Transport von Fahrrädern mit Seilschwebebahnen. Die Notwendigkeit zum umfangreichen und schnellen Transport der Fahrräder ist dann gegeben, wenn in der Umgebung der Seilschwebebahn ein Downhill-Fahrradrennen stattfindet. Das gilt vor allem, wenn der Ausgangspunkt des Rennens auf der Berghöhe nicht durch eine befahrbare Straße erreichbar ist.

Die Mitnahme von Sportgeräten, wie z. B. Skier, wird bei Kabinenliften durch außenseitig montierte korbartige Vorrichtungen erleichtert. Vor dem Eintritt in die Kabine stellt der Skifahrer oder die Skifahrerin die Skier und Skistöcke in diese Vorrichtung. Bei Sesselliften dagegen bleiben die Skier während der Liftfahrt an den Stiefeln der Fahrgäste befestigt. Das ist sinnvoll, weil der Ausstieg aus dieser Art von Sessellift meist auf der abschüssigen Seite eines kleinen Schneehügels erfolgt, der am Beginn der Abfahrtspiste liegt. Bei Sesselliften im Winterbetrieb sind aus diesem Grund keine zusätzlichen Transportvorrichtungen zur Befestigung am Rahmen der Sesselaufhängung vorgesehen.

Andere sperrige Transportgüter, wie z. B. Fahrräder, werden im Sommerbetrieb der Liftanlagen bislang mit speziellen Transportgondeln befördert. Nachteilig dabei ist, dass die Fahrräder meist liegend transportiert werden und eine Beschädigung dann mit hoher Wahrscheinlichkeit möglich ist. Das gilt insbesondere, wenn mehrere Fahrräder aufeinanderliegend befördert werden. Ein zügiges Beladen bei laufender Liftanlage ist außerdem nicht möglich.

Aus der US-A- 6 019 266 ist eine Fahrradtransportvorrichtung bekannt, die für die Befestigung an Fahrzeugen bestimmt ist und bei welcher die Reifen des Fahrrads in ein U-Profil eingestellt werden. Darüber sind weitere, der Fixierung dienende Elemente vorgesehen, die in vertikaler Richtung festlegen.

Der Erfindung liegt das Problem der Schaffung einer Fahrradtransportvorrichtung zugrunde, welche die Mitnahme von Fahrrädern bei Fahrten mit einer entsprechend ausgerüsteten Personenseilschwebebahnen ermöglicht. Die Verstauung des Fahrrades in der Transportvorrichtung soll bei laufendem Lift durch eine zum Liftpersonal gehörende Person erfolgen.

Erfindungsgemäß wird die Aufgabe dadurch gelöst, dass eine Fahrradtransportvorrichtung vorhanden ist, die aus einem reifenhaltendem U-Profil, das durch einen Arm mit einem Befestigungselement verbunden ist und aus weiteren Elementen zur Halterung des Fahrrades besteht und das Befestigungselement am Sessel und/oder dessen Aufhängung oder an der Kabine und/oder deren Rahmen seitlich montiert ist.

Der Kerngedanke der Erfindung besteht darin, dass die erfindungsgemäße Fahrradtransportvorrichtung bei laufendem Seilbahnbetrieb durch das bodenpersonal beladen wird, während der Fahrgast seinen Sitz oder Stehplatz einnimmt. Die Transportvorrichtung ist dabei so gestaltet, dass das Fahrrad aufgrund seiner Schwerkraft eine transportsichere Position erhält. Ein seitliches Herausfallen des Fahrrades wird durch zusätzliche Haltebügel verhindert.

In der erfindungsgemäßen Fahrradtransportvorrichtung ist das Befestigungselement eine Klemmschelle, die am hohlzylindrischen Profil der freipendelnden Sesselaufhängung befestigt wird. Aus Sicherheitsgründen und zur Verbesserung der Abstützung durch Aufnahme der Kippmomente empfiehlt sich in der Regel die Anbringung zwei (oder gar mehr) Klemmschellen. (Die Sesselaufhängung besteht meist aus einem hohlzylindrischen s-förmigen Tragrohr, auf dessen horizontal verlaufenden unteren Ende ein Sessel befestigt ist.) An der Unterseite des horizontal verlaufenden Teils der Aufhängung, also im Bereich der Sitzbefestigung, besteht die Möglichkeit zur Montage des Befestigungselementes.

Das Befestigungselement ist mit dem zur Aufnahme der Reifen des Fahrrades vorgesehenen U-Profil durch einen Arm verbunden, der vorzugsweise ein Vierkantprofil ist und etwa in der Mitte des U-Profils befestigt ist. Das U-Profil ist nach der Montage der Transportvorrichtung parallel zur Seite des Sessels und demzufolge in Bewegungsrichtung des Sessels ausgerichtet, wobei das in Bewegungsrichtung der Seilbahn liegende Ende des U-Profils entweder tiefer oder höher liegt als das talseitige Ende. In jedem Fall ist am tieferliegenden Ende des U-Profils, zur Aufnahme und Halterung eines der beiden Fahrradreifens, ein nach oben rund gebogenes Blech mit beidseitigen Haltebügeln befestigt. Der Krümmungsradius des gebogenen Bleches ist an den üblichen Reifen angenähert. Die Haltebügel stabilisieren das Fahrrad senkrecht zum U-Profil und damit auch senkrecht zur Bewegungsrichtung nach beiden Seiten und sind jeweils mit einem Bügelende am auslaufenden Blech befestigt. Das andere Bügelende ist jeweils am entsprechenden Seitenteil des U-Profils befestigt.

Am höher liegenden Ende des U-Profils ist an dessen seitlichen Wänden ein rund gebogener Haltebügel befestigt, der ein Herausrollen des eingestellten Fahrrades bei extremen Pendelbewegungen der Sesselaufhängung verhindert. Zur zusätzlichen Stabilisierung des Fahrrades ist am höher liegenden Ende des U-Profils auf der dem Sessel zugewandten Seite parallel zum zweiten Fahrradreifen ein seitlicher Haltebügel angebracht.

Der entscheidende Vorteil der Erfindung besteht darin, dass das Fahrrad, nachdem es auf dem U-Profil steht, von selbst in eine transportsichere Position rollt, in dieser Position sicher verbleibt und so ohne zusätzliche Sicherung transportiert werden kann. Dieser Umstand erlaubt auch die schnelle Entnahme des Fahrrades bei laufendem Lift an der Bergstation.

Zur Versteifung der Transportvorrichtung wird zwischen dem tiefer liegenden Ende des U-Profils und dem Verbindungsarm mindestens eine Querstrebe angebracht.

Die Verwendung der erfindungsgemäßen Fahrradtransportvorrichtung geschieht in folgender Weise: Bei Aufnahme des Fahrradtransportbetriebes ist zunächst an der Seilschwebebahn die erfindungsgemäße Transportvorrichtung zu befestigen. Um die für den Winterbetrieb nicht benötigte Fahrradtransportvorrichtung wieder beseitigen zu können, wird die Verbindung in aller Regel durch Verschraubung vorgenommen werden. Bei der Handhabung sind zwei Fälle zu unterscheiden: Bei jenen Schwebebahnen, die an einer Station zum Halt kommen, wie z. B. den Kabinenbahnen erfolgt das Beladen durch Aufstellen des Fahrrades in der vorbeschriebenen Weise. Einschließlich begibt sich die Person in das Innere der Kabinenbahn, wobei der Ausstieg im bereits beschriebenen Sinne und in hierzu analoger Weise erfolgt.
Der Betrieb von Sesselliften unterscheidet sich dahingehend grundlegend, als das - abgesehen von Nothalt - ein kontinuierlicher Betrieb herrscht. Eine Berg-/Talstation muss durch eine dritte Person während des Ein-/Ausstieges des Benutzers das Einstellen bzw. Herausheben des Fahrrades aus dem Transportgestell erfolgen. Hierbei ist grundsätzlich nicht ausgeschlossen, dass der die Sesselbahn Benutzende selbst das Be- und Entladen vornimmt, wofür jedoch ein vergleichsweise kurzes Zeitintervall zur Verfügung steht und deshalb Behändigkeit und Geschick zur Voraussetzung hat. Allerdings erweist sich hier als entscheidender Vorteil, dass das Absetzen und/oder Entnehmen des Fahrrades sehr rasch von statten geht und keine weiteren zusätzlichen Maßnahmen der Befestigung erfordert.

Weitere Einzelheiten und Merkmale der Erfindung lassen sich dem nachfolgenden Beschreibungsteil der Zeichnungen entnehmen.

Es zeigen in schematischer Darstellung
- **Figur 1**: am Sessellift montierte Fahrradtransportvorrichtung von der Talseite gesehen
- **Figur 2**: am Sessellift montierte Fahrradtransportvorrichtung in Seitenansicht
- **Figur 3**: Fahrradtransportvorrichtung in Draufsicht.

Bei der gezeigten Vorrichtung handelt es sich um ein mögliches Ausführungsbeispiel der erfindungsgemäßen Fahrradtransportvorrichtung.

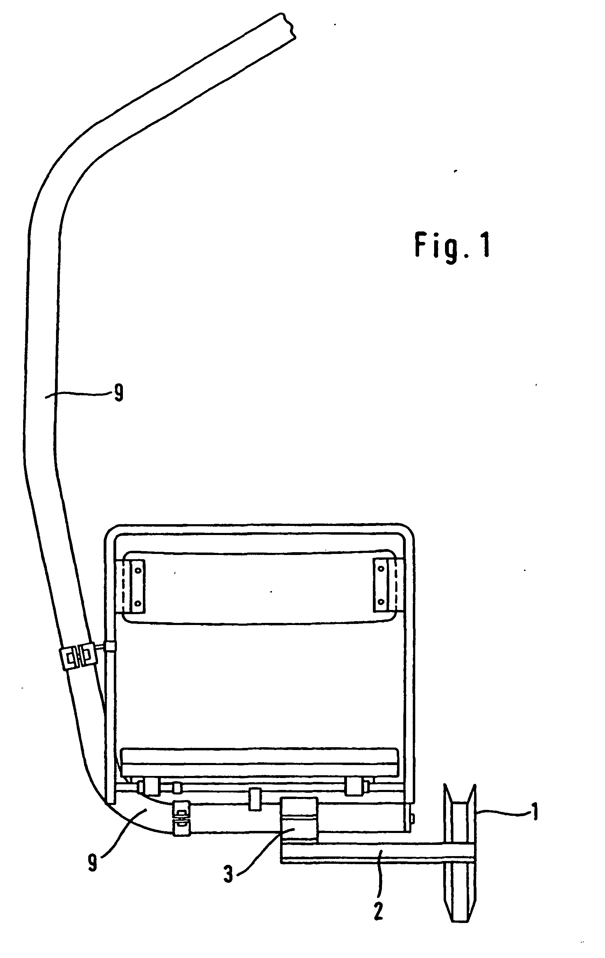

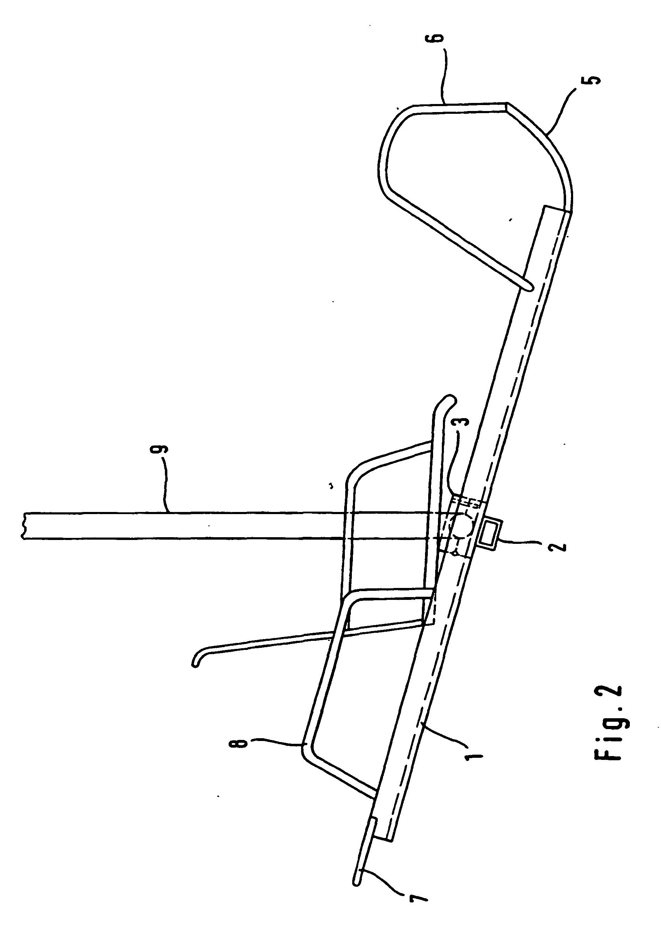

In Figur 1 ist die an der Sesselaufhängung 9 untenends montierte Fahrradtransportvorrichtung von der Talseite zu sehen. Die am hohlzylindrischen Profil der Sesselaufhängung 9 befestigte Klemmschelle 3 ist über einen Arm 2, der aus einem Vierkant-Profil besteht, mit einem U-Profil 1 verbunden. Dabei ist in dieser Ausführungsform das bergseitige Ende des U-Profils 1 nach unten und das talseitige Ende nach oben geneigt. (Nicht dargestellt sind die zur zusätzlichen Halterung des Fahrrades vorgesehenen Bestandteile der Transportvorrichtung. Sie lassen sich der in Figur 2 gezeigten Seitenansicht entnehmen.)

In Figur 2 ist die erfindungsgemäße Fahrradtransportvorrichtung von der Seite zu sehen. Das U-Profil 1 ist etwa in der Mitte mit dem Arm 2 verbunden, der anderenends an der Klemmschelle 3 befestigt ist. In der gezeigten Ausführungsform ist das bergseitige Ende des U-Profils nach unten geneigt, so dass dieser Abschnitt mit der Sesselaufhängung 9 einen stumpfen Winkel bildet. Mit dem Ende des U-Profils 1 ist ein rund gebogenes Blech 5 verbunden. Am Ende des Bleches 5 sind beidseitig zwei Haltebügel 6 befestigt, die mit ihrem jeweiligen zweiten Ende an den Seitenwänden des U-Profils 1 befestigt sind. Aufgrund der Neigung des U-Profils rollt das Fahrrad nach dem Einstellen in das U-Profil 1 aufgrund der Schwerkraft an den tiefsten Punkt der Vorrichtung und nimmt dann eine stabile Position auf dem rundgebogenen Blech 5 ein. Die sich an dieser Stelle befindliche Felge wird zu beiden Seiten durch die Bügel 6 gestützt. Um ein Herausrollen des Fahrrades bei pendelnder Sesselaufhängung 9 zu vermeiden, ist an den Seiten des höher liegenden Endes des U-Profils 1 ein rund gebogener Bügel 7 befestigt. Zur seitlichen Halterung ist auf Höhe des zweiten Rades ein weiterer Bügel 8 mit der dem Sessel zugewandten Seite des U-Profils 1 verbunden.

Der wesentliche Vorteil der Vorrichtung in der geneigten Anbringung besteht darin, dass das Fahrrad, nachdem es auf das U-Profil gehoben wurde, aufgrund seiner Schwerkraft von selbst in eine transportsichere Position rollt.

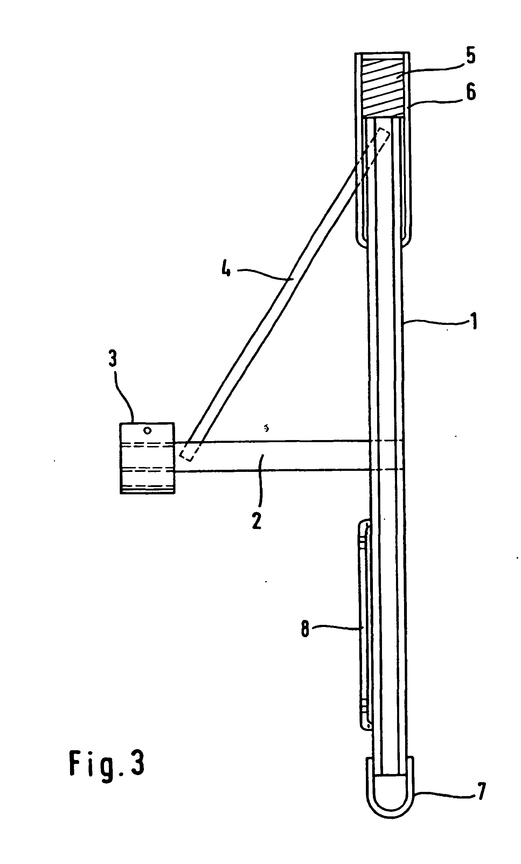

In Figur 3 ist die nicht an der Sesselaufhängung montierte Fahrradtransportvorrichtung in Draufsicht zu sehen. Zur Versteifung der Vorrichtung ist zwischen dem U-Profil 1 und dem Verbindungsarm 2 eine Querstrebe 4 angebracht. Die zur Befestigung der Transportvorrichtung an der Sesselaufhängung vorgesehene Klemmschelle 3 ist mit dem linken Ende des Verbindungsarms 2 verbunden. Die zur Halterung und Sicherung des eingestellten Fahrrades vorgesehenen Bügel und Auflagen sind alle am U-Profil 1 befestigt: Zur Halterung des Reifens dient das rundgebogene Blech 5, das mit dem im montierten Zustand tieferliegenden Ende des U-Profils verbunden ist. Zur beidseitigen Stabilisierung des Fahrrades in diesem Bereich sind die beiden Bügel 6 vorgesehen. Zur seitlichen Stabilisierung des zweiten Rades dient der Bügel 8. Um ein Herausrollen des Fahrrades bei pendelnder Sesselaufhängung zu verhindern, ist an den seitlichen Wänden des U-Profils 1 am anderen Ende ein Bügel 7 befestigt.

## Patentansprüche

1. Personenseilschwebebahn mit einem Sessel oder einer Kabine, **dadurch gekennzeichnet, dass** eine Fahrradtransportvorrichtung vorhanden ist, die aus einem reifenhaltendem U-Profil (1), das durch einen Arm (2) mit einem Befestigungselement (3) verbunden ist und aus weiteren Elementen zur Halterung des Fahrrades besteht und das Befestigungselement am Sessel und/oder dessen Aufhängung oder an der Kabine und/oder deren Rahmen seitlich montiert ist.

2. Personenseilschwebebahn nach Anspruch 1, **dadurch gekennzeichnet, dass** das Befestigungselement (3) mindestens eine Klemmschelle ist, die bei Sesselliften an der freipendelnden meist hohlzylindrischen und s-förmigen Sesselaufhängung vorzugsweise untenends befestigt ist.

3. Personenseilschwebebahn nach Anspruch 1 und 2, **dadurch gekennzeichnet, dass** der am Befestigungselement (3) befestigte Arm (2) anderenends etwa in der Mitte der Längsseite des U-Profils (1) angebracht ist.

4. Personenseilschwebebahn nach einem der vorhergehenden Ansprüche, **dadurch gekennzeichnet, dass** der das Befestigungselement (3) und das U-Profil (1) verbindende Arm (2) ein Vierkantprofil ist.

5. Personenseilschwebebahn nach einem der vorhergehenden Ansprüche, **dadurch gekennzeichnet, dass** das U-Profil (1) nach der Montage der Transportvorrichtung parallel zur Seite des Sessels und damit in dessen Bewegungsrichtung ausgerichtet ist, wobei das in Bewegungsrichtung der Seilbahn bergseitig liegende Ende des U-Profils (1) entweder
- tiefer liegt, so dass das bergseitige Ende des U-Profils (1) mit der in vertikaler Position hängenden Sesselaufhängung (9) einen stumpfen Winkel bildet, oder
- höher liegt, so dass das talseitige Ende des U-Profils mit der in vertikaler Position hängenden Sesselaufhängung (9) einen stumpfen Winkel bildet.

6. Personenseilschwebebahn nach einem der vorgenannten Ansprüche, **dadurch gekennzeichnet, dass** am tieferliegenden Ende des U-Profils (1) zur Halterung einer der beiden Fahrradreifen, ein nach oben rund gebogenes Blech (5) mit beidseitigen Haltebügeln (6) befestigt ist, wobei das eine Ende eines Haltebügels (6) mit dem auslaufenden seitlichen Ende des Bleches (5) und das andere Bügelende (6) mit dem Seitenteil des U-Profils (1) auf der gleichen Seite der Transportvorrichtung verbunden ist.

7. Personenseilschwebebahn nach einem der vorgenannten Ansprüche, **dadurch gekennzeichnet, dass** mit den seitlichen Wänden des U-Profils (1) am höher liegenden Ende ein rundgebogener Haltebügel (7) verbunden ist.

8. Personenseilschwebebahn nach einem der vorgenannten Ansprüche, **dadurch gekennzeichnet, dass** seitlich am höher liegenden Ende des U-Profils (1) auf der dem Sessel zugewandten Seite, zur weiteren Abstützung des Fahrrads ein seitlicher Haltebügel (8) befestigt ist.

9. Personenseilschwebebahn nach einem der vorgenannten Ansprüche, **dadurch gekennzeichnet, dass** das tiefer liegende Ende des U-Profils und der Arm durch mindestens eine Querstrebe (4) verbunden sind.

## Claims

1. Passenger cable railway comprising a chair or cabin, **characterised in that** a bicycle transportation device is present, which consists of a tyre-holding U-profile (1), which is connected by means of an arm (2) to a fastening element (3), and of further elements for fixing the bicycle, and **in that** the fastening element is mounted laterally on the chair and/or the suspension thereof, or on the cabin and/or the frame thereof.

2. Passenger cable railway according to claim 1, **characterised in that** the fastening element (3) comprises at least one clamp, which in the case of chairlifts is fastened to the free-swinging, usually hollow-cylindrical and S-shaped chair suspension, preferably at the bottom thereof.

3. Passenger cable railway according to claims 1 and 2, **characterised in that** the arm (2), which is fastened to the fastening element (3), is connected at its other end approximately in the centre of the longitudinal side of the U profile (1).

4. Passenger cable railway according to one of the preceding claims, **characterised in that** the arm (2) that connects the fastening element (3) and the U profile (1) is a square profile.

5. Passenger cable railway according to one of the preceding claims, **characterised in that** the U profile (1), after assembly of the transport device, is aligned such that it is parallel to the side of the chair and thereby in the direction of movement thereof, wherein that end of the U profile (1) that is disposed at the uphill end of the U profile (1), either
- lies lower, such that the uphill end of the U profile (1) forms an obtuse angle with the chair suspension (9), which hangs in a vertical position, or
- lies higher, such that the downhill end of the U profile forms an obtuse angle with the chair suspension (9), which hangs in a vertical position.

6. Passenger cable railway according to one of the preceding claims, **characterised in that** an upwardly curved plate (5) is attached, by means of brackets (6) at both sides, on the lower-disposed end of the U-profile (1) for fixing one of the two bicycle tyres, one end of a bracket (6) being connected to the trailing lateral end of the plate (5) and the other bracket (6) end being connected to the lateral part of the U profile (1) on the same side of the transport device.

7. Passenger cable railway according to one of the preceding claims **characterised in that** a lateral bracket (7) is connected to the lateral walls of the U profile (1) at the higher-disposed end.

8. Passenger cable railway according to one of the preceding claims, **characterised in that** a lateral bracket (8) is fastened laterally on the higher-disposed end of the U profile (1), on the side facing the chair, for further support of the bicycle

9. Passenger cable railway according to one of the preceding claims, **characterised in that** the lower-disposed end of the U profile and the arm are connected by means of at least one cross strut (4).

## Revendications

1. Téléphérique destiné au transport de personnes au moyen d'un siège ou d'une cabine, **caractérisé par** la présence d'un dispositif de transport de vélo composé d'un profilé en U (1) destiné au support du pneu, lequel est relié à un élément de fixation (3) par l'intermédiaire d'un bras (2) et d'autres éléments destinés à tenir le vélo et par le fait que l'élément de fixation est monté latéralement sur le siège et/ou sa suspension ou à la cabine et/ou son cadre.

2. Téléphérique destiné au transport de personnes conforme à la revendication 1, **caractérisé par le fait que** l'élément de fixation (3) est au moins un collier de blocage qui est fixé de préférence à la partie inférieure de la suspension du siège, constituée généralement d'un cylindre creux en forme de S oscillant librement.

3. Téléphérique destiné au transport de personnes conforme aux revendications 1 et 2, **caractérisé par le fait que** le bras (2) fixé sur l'élément de fixation (3) a son autre extrémité attachée en un point situé environ au milieu de la partie longitudinale du profilé en U (1).

4. Téléphérique destiné au transport de personnes conforme à un des articles précédents, **caractérisé par le fait que** le bras (2) reliant l'élément de fixation (3) au profilé en U (1) est un profilé à section quadrangulaire.

5. Téléphérique destiné au transport de personnes conforme à une des revendications précédentes, **caractérisé par le fait que** le profilé en U (1) est orienté, après le montage du dispositif de transport, parallèlement au côté du siège et par conséquent dans le sens de son mouvement, sachant que l'extrémité du profilé en U (1) située du côté de la montagne et orientée dans la direction du mouvement du téléphérique, est disposée
• soit plus bas, si bien que l'extrémité du profilé en U (1) située du côté du sommet de la montagne forme un angle obtus avec la suspension du siège (9) suspendue en position verticale,
• soit plus haut, si bien que l'extrémité du profilé en U située du côté de la vallée forme un angle obtus avec la suspension du siège (9) suspendu en position verticale.

6. Téléphérique destiné au transport de personnes conforme à une des revendications précédemment citées, **caractérisé par le fait qu'**une tôle (5) incurvée vers le haut est fixée des deux côtés à l'aide d'étriers de fixation à l'extrémité la plus basse du profilé en U (1) afin de maintenir un des deux pneus du vélo, sachant que l'une des extrémités d'un étrier de fixation (6) est reliée à l'extrémité latérale finissante de la tôle (5) tandis que l'autre extrémité de l'étrier de fixation (6) est reliée à un des côtés du profilé en U (1), du même côté que le dispositif de transport.

7. Téléphérique destiné au transport de personnes conforme à une des revendications précédemment citées, **caractérisé par le fait qu'**un étrier de fixation incurvé (7) est relié à l'extrémité supérieure des parois latérales du profilé en U (1).

8. Téléphérique destiné au transport de personnes conforme à une des revendications précédemment citées, **caractérisé par le fait qu'**un étrier de fixation (8) latéral est fixé sur le côté de l'extrémité supérieure du profilé en U (1) sur le côté tourné vers le siège en tant que support complémentaire du vélo.

9. Téléphérique destiné au transport de personnes conforme à une des revendications précédemment citées, **caractérisé par le fait que** l'extrémité inférieure du profilé en U et le bras sont reliés par au moins un étrésillon diagonal (4).
